# EUROPEAN PATENT SPECIFICATION

(11) **EP 2 360 032 B1**
(45) Date of publication and mention of the grant of the patent: **08.05.2013**
(21) Application number: 11250157.2
(22) Date of filing: 11.02.2011
(51) Int. Cl.: B60C 7/10

(54) **Composite solid tire**
Festkörperreifen
Pneu plein composite

(30) Priority: 17.02.2010 JP 2010031944
(43) Date of publication of application: 24.08.2011
(73) Proprietor: MAEDA SHELL SERVICE CO., LTD., Okazaki-shi Aichi-ken 444-3501 (JP)
(72) Inventor: Maeda, Sadao, Okazaki-shi Aichi-ken 444-3501 (JP)
(74) Representative: Paget, Hugh Charles Edward

(56) References cited:
- EP-A1- 1 574 361
- EP-A1- 1 721 758
- DE-A1- 2 755 111
- DE-U1- 29 801 329
- GB-A- 2 264 502
- JP-A- 2004 359 219
- JP-A- 2005 161 959
- JP-U- 3 144 992

## Description

### BACKGROUND OF THE INVENTION

### Field of the Invention

The present invention relates to a composite solid tire, and particularly to a composite solid tire comprising an inner rubber layer and an outer layer formed of a polyurethane elastomer.

### Discussion of Related Art

In a vehicle such as an automotive vehicle or an industrial vehicle, as a tire that supports a load and has the function of smoothly transmitting forces between the vehicle and road surface, there have conventionally been known two sorts of tires, i.e., a pneumatic tire having a hollow structure in which air is charged, and a solid tire having a solid structure constituted by a rubber-based annular body. In particular, the solid tire enjoys, as tire's functions, a load supporting property, a cushioning property, and a rubber elasticity, and is widely used in low-speed and high-load vehicles such as a forklift truck, an industrial tractor, a battery carrier, or a trailer. As predominant sorts of the solid tire, there are known a tire that is constituted by a single tread rubber and is directly bonded to a wheel, a tire that is constituted by a rubber adhered to a base band by vulcanization and is press-fitted onto a wheel, and a tire that is constituted by an annular tread rubber and is fitted on an outer circumferential portion of a wheel.

Generally, the solid tire is known as a solid rubber tire that is constituted by a tread rubber formed of NR or SBR, for example. Since the solid rubber tire contacts the road surface and produces a frictional force to allow movement of the vehicle, a contact surface of the tire with the road surface is worn little by little as the tire is used for a long time and, when the tire reaches the end of its life, the tire should be disposed of. Recently, however, the disposal of waste tires has become a serious social problem. In particular, since the solid rubber tires are heavier than pneumatic tires used in passenger cars, for example, the solid rubber tires are more difficult to handle. In addition, the solid rubber tires are hard to burn or find other applications. Thus, the solid rubber tires are very difficult to dispose of.

In JP-A-2004-359219 and Japanese patent No.4391274, for example, the inventor of the present invention has disclosed a composite solid tire having a structure in which a polyurethane elastomer layer having a predetermined thickness is provided on an outer circumferential surface of a worn solid rubber tire having a remaining rubber layer with a pre-determined thickness. Due to this structure of the composite solid tire, an annular tread portion attached to an outer circumferential portion of a wheel is constituted by a rubber layer having a predetermined thickness, which constitutes an inner rubber layer of the solid rubber tire, and the polyurethane elastomer layer that is integrally formed on the rubber layer. Therefore, impacts exerted from a road surface to the tread portion can be effectively absorbed or damped by the rubber layer which is positioned inner side, and the outer polyurethane elastomer layer that provides a surface of the tread portion, which is to be in contact with the road surface, enjoys a significantly improved durability due to an excellent wear resistance of the polyurethane elastomer. Thus, the composite solid tire having such a structure can have a significantly prolonged service life.

However, it is newly found that there is a problem even in the composite solid tire whose service life is prolonged. Specifically, when the composite solid tire is used for a long period of time under a certain condition, the bond between the rubber layer positioned inner side and the polyurethane elastomer layer positioned outer side may be broken, whereby it poses a risk of detachment or peeling of the polyurethane elastomer layer from the rubber layer. For example, in a forklift truck, in which the composite solid tire is favorably used, a heavy load is always applied to the rear tire, because a big balance weight is provided in the vicinity of the rear tire, which is steered by the steering operation. Thus, when the tread surface of the tire is turned or spun on the road surface by the steering operation, a large stress is applied to the tire in the thrust direction (axial direction of the tire). When the application of stress is repeated for a long period of time, the bond between the rubber layer and the polyurethane elastomer layer may be broken.

In addition, during the use of the composite solid tire for a long period of time, various additives such as a plasticizer, softener, and antioxidant, which are mixed in the rubber material, may bleed from the rubber layer positioned inner side, thereby deteriorating the effect of the adhesive which bond the rubber layer and the polyurethane elastomer layer. Further, the effect of the adhesive may be deteriorated by the heat generated by the friction between the tire and the road surface during driving of vehicle. As a result, by the force input to the tire in a transverse direction (axial direction of the tire), the rubber layer and the polyurethane elastomer layer may be easily detached from each other. Thus, the durability of the tire is deteriorated.

DE-A-2755111 illustrates a solid tire having a solid core ring, which has a covering layer at its outer surface. This covering layer provides the running surface. In one construction disclosed, the outer covering layer is described as consisting of a crosslinked rubber-elastic polyurethane. In another construction, the core ring has a groove and the outer covering has a projecting filling the groove, to achieve a more secure bonding of the core ring and the outer covering.

EP-A-1721758 shows a similar construction, in which a foamed polyurethane elastomer layer is provided on the outer surface of an inner wheel core. The radial outer surface of the inner core is recessed towards the centre.

### SUMMARY OF THE INVENTION

The present invention was made in the light of the above-described situations. It is therefore an object of the present invention to provide a composite solid tire as defined in claim 1, comprising an inner rubber layer and an outer layer formed of a polyurethane elastomer, in which bonding strength of these two layers are effectively improved so as to have a better durability.

The above-described object of the present invention may be attained according to a principle of the invention, which provides a composite solid tire, comprising: an inner rubber layer having a predetermined thickness; and an outer layer formed of a polyurethane elastomer which is integrally formed on an outer circumferential surface of the inner rubber layer, where the outer circumferential surface of the inner rubber layer includes at least one circumferential groove and the outer layer integrally includes at least one anchor portion formed of the same polyurethane elastomer as the outer layer, the at least one anchor portion being configured to fill the at least one circumferential groove, wherein:

on the outer circumferential surface of the inner rubber layer, a plurality of connecting pins formed of a polyurethane elastomer are vertically provided with a predetermined distance therebetween in a circumferential direction and end portions of the plurality of connecting pins are inserted into the outer layer, thereby connecting the outer layer and the inner rubber layer via the plurality of connecting pins.

Preferred embodiments of the invention are defined in the dependent claims.

According to a preferable aspect of the present invention, the at least one circumferential groove formed in the outer circumferential surface of the inner rubber layer comprises two circumferential grooves that are arranged parallel to each other and extend in the circumferential direction of the inner rubber layer, and the plurality of connecting pins are provided between the two circumferential grooves so as to space apart from each other in the circumferential direction.

According to a favorable aspect of the present invention, each of the plurality of connecting pins has a cross sectional diameter of 10 to 30 mm and each of the end portions thereof is inserted into each of the inner rubber layer and the outer layer with a length of 10 to 30 mm. In addition, according to another favorable aspect of the present invention, the at least one circumferential groove has a rectangular cross sectional shape.

Further, it is advantageous in the composite solid tire of the present invention that the inner rubber layer is provided by a remaining portion of a worn solid rubber tire having a predetermined thickness.

As described above, in the composite solid tire having a structure of the present invention, the at least one anchor portion that is formed of a polyurethane elastomer and integrally formed with the outer layer is provided such that the at least one anchor portion fills the at least one circumferential groove formed in the outer circumferential surface of the inner rubber layer. Specifically, the at least one anchor portion integrally formed with the outer layer is engaged with the at least one circumferential groove that is provided in the inner rubber layer with a predetermined depth. Thus, the load inputted in the thrust direction (axial direction) of the tire is received by the side surface of the at least one anchor portion and the side surfaces of the at least one circumferential groove due to the abutting contact between them, in addition to the retention strength between the outer circumferential surface of the inner rubber layer and the inner circumferential surface of the outer layer, thereby effectively dispersing the stress applied to the connected portion. As a result, it can advantageously reduce or eliminate a risk that the inner rubber layer and the outer layer are detached from each other. As described above, the durability of the composite solid tire can be further effectively improved, because the inner rubber layer and the outer layer of the composite solid tire is strongly connected.

According to the composite solid tire having a structure of the preferred embodiment of the present invention, in addition to the connection between the at least one anchor portion and the at least one circumferential groove, the inner rubber layer and the outer layer are connected by a plurality of connecting pins that are formed of a polyurethane elastomer and are inserted into both of the inner and outer layers at a plurality of positions in the circumferential direction of the layers. Thus, the stress that is generated by the load in the axial direction of the tire and that is applied to the connecting portion between the inner rubber layer and the outer layer can be more effectively received in a dispersed state. As a result, the composite solid tire having an improved durability can be obtained due to the stronger connection between the inner rubber layer and the outer layer.

### BRIEF DESCRIPTION OF THE DRAWINGS

The above and other objects, features, advantages and technical and industrial significance of the present invention will be better understood by reading the following detailed description of preferred embodiments of the invention, when considered in connection with the accompanying drawings, in which:
Fig. 1 is a side view illustrating an example of a comparative composite solid tire, provided for explanation of the present invention;
Fig. 2 is a cross-sectional view taken along line A-A of Fig. 1;
Fig. 3 is an enlarged partial cross-sectional view illustrating a portion B of Fig. 2;
Fig. 4 is a cross-sectional view illustrating an example of the composite solid tire according to the present invention, which corresponds to Fig. 2; and
Fig. 5 is a cross-sectional view taken along line C-C of Fig. 4.

### DETAILED DESCRIPTION OF A PREFERRED EMBODIMENT

Hereinafter, there will be described in detail a preferred embodiment of the present invention by reference to the drawings.

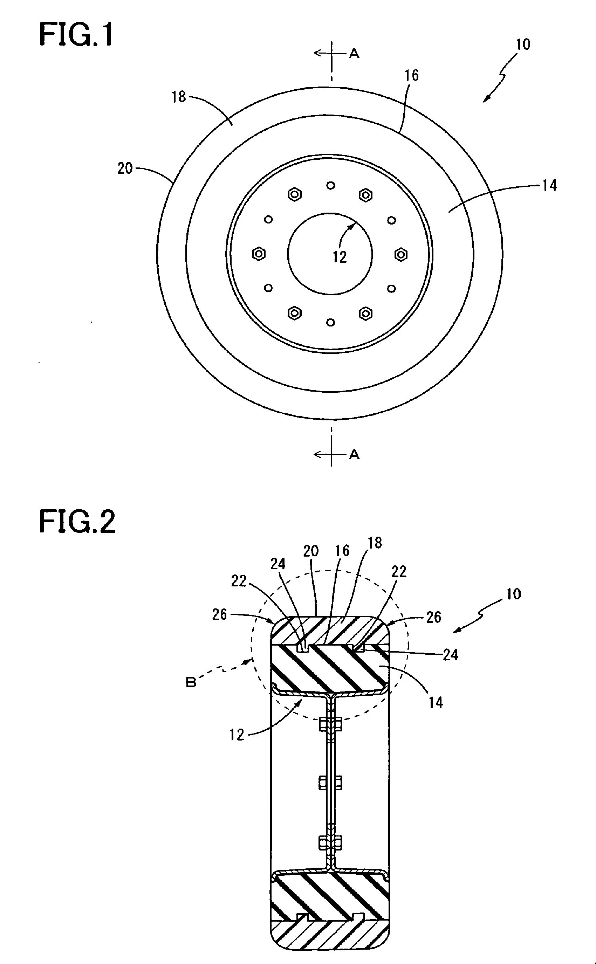

Initially, Fig. 1 illustrates a side view of one construction of a composite solid tire having a structure not within the present invention. The composite solid tire 10 has an annular shape as a whole and a wheel 12 is attached to an inner circumferential portion of the composite solid tire 10. Further, an inner rubber layer 14 having a predetermined thickness is provided so as to position at an inner circumferential side of the composite solid tire 10. Further, on an outer circumferential surface 16 of the inner rubber layer 14, an outer layer 18 formed of a polyurethane elastomer is integrally formed with a predetermined thickness, thereby providing a tread surface 20. That is, the composite solid tire 10 has a double-layered structure including the inner rubber layer 14 and the outer layer 18 each having a predetermined thickness.

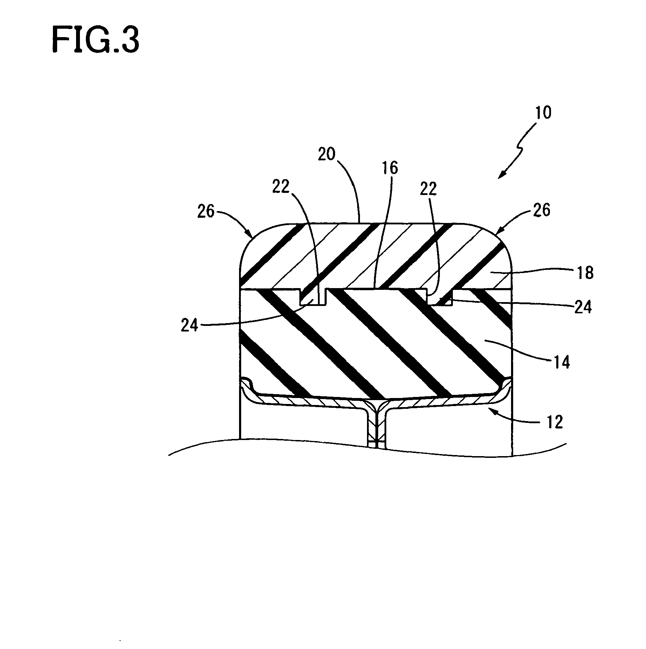

More specifically described, like the conventional solid rubber tire, the inner rubber layer 14 is formed of one or more rubber material(s) that is/are selected from NR, IR, SBR, BR, EPM, EPDM, IIR, and the like. Generally, the inner rubber layer 14 is formed by vulcanizing a blend of rubbers including NR or IR as a main component into an annular shape (doughnut shape). As illustrated in the cross-sectional view of Fig. 2, on the outer circumferential surface 16 of the inner rubber layer 14, a plurality of grooves (here, two circumferential grooves 22, 22) each having a predetermined depth are formed parallel with each other with a predetermined distance therebetween in a width direction of the outer circumferential surface 16 such that they extend in a circumferential direction. Here, the circumferential groove 22 has a rectangular cross sectional shape as illustrated in Fig. 2 and Fig. 3. Generally, the width of the circumferential groove is in a range of about 10 to about 30 mm and the depth thereof is in a range of about 10 to about 30 mm.

The outer layer 18 is integrally formed on the outer circumferential surface of the inner rubber layer 14 by a die-casting method in which a conventionally known polyurethane elastomer material i.e., raw material for polyurethane elastomer, is cast into a die, so that the composite solid tire 10 may have a desired thickness. Further, at the surface of the outer layer 18 which is positioned at the side of the inner rubber layer 14, the anchor portions 24, 24 having a shape corresponding to the circumferential grooves 22, 22, which are formed in the outer circumferential surface 16 of the inner rubber layer 14, are integrally formed as two projections by using the same polyurethane elastomer material as the outer layer 18, such that they continuously extend parallel to each other in the circumferential direction.

Then, the inner rubber layer 14 and the outer layer 18 are integrated such that the anchor portions 24, 24 of the outer layer 18 are fitted into the circumferential grooves 22, 22 of the inner rubber layer 14. More specifically described, the anchor portions 24, 24 vertically provided on the inner circumferential surface of the outer layer 18 are inserted into the circumferential grooves 22, 22 formed in the outer circumferential surface 16 of the inner rubber layer 14, thereby forming the composite solid tire 10 having an annular shape (doughnut shape) as a whole.

The inner rubber layer 14 and the outer layer 18 are integrated by any well-known method which is suitably selected. For example, adhesive is applied to surfaces of the inner and outer layers 14, 18 to bond these layers. Further, the composite solid tire 10 is attached to the wheel 12 by a well-known method, such as bonding, press-fitting, or fitting. Specifically, the outer circumferential surface of the wheel 12, which is fixed to an axial shaft of the vehicle, is attached to the inner circumferential portion of the annular shape, i.e., to the inner circumferential portion of the inner rubber layer 14.

As the polyurethane elastomer which is a formation material of the outer layer 18 of the composite solid tire 10, any polyurethane elastomer such as a thermosetting or room temperature setting polyurethane elastomer may be suitably selected and used. Generally, the room temperature setting polyurethane material (raw material) contains MDI based isocyanate such as a modified diphenylmethane-4,4'-diisocyante as a polyisocyanate component, and a polyether polyol or the like as a polyol component, and further an aromatic amine such as an aromatic primary amine as a catalyst that facilitates the curing reaction of the polyisocyanate component and the polyol component at a low temperature, for example. The polyisocyanate component, the polyol component and the aromatic amine may be suitably selected, as needed, from various commercially available products. For example, "BAYTEC" which is available from Bayer AG, Germany is selected, and is reacted and cured at a temperature of 10 to 50°C. In the reaction, when about one minute passes after the two components are mixed with each other, the mixture of the components are in solid state to a certain degree, and after they are kept at room temperature for three days, the reaction substantially ends and the polyurethane elastomer having its final properties is obtained.

In the composite solid tire 10 including the outer layer 18 formed of a polyurethane elastomer, as illustrated in Fig. 3, both end portions (corners) in the width direction of the tread surface of the outer layer 18 are formed as curved portions 26, 26 that have a predetermined radius of curvature. It is preferable that the radius of curvature of the curved portion 26 that is positioned at an outer side in the vehicle width direction be larger than that of the curved portion 26 that is positioned at the other side, under installation of the composite solid tire 10 on the vehicle. Due to this arrangement, it can be effectively mitigated that the stress is concentrated on the end portion of the tread surface 20 (end portion of the outer layer 18) which is positioned at the outer side of the vehicle where big stress is apt to be applied during driving of the vehicle. Thus, it can advantageously prevent or mitigate the risk that the end portions of the outer layer 18 are damaged.

According to the composite solid tire 10, the anchor portion 24 formed integrally with the outer layer 18 is engaged with the circumferential groove 22 formed in the outer circumferential surface of the inner rubber layer 14. Thus, in addition to the connection between the outer circumferential surface of the inner rubber layer and the inner circumferential surface of the outer layer, the load inputted into the tire in a thrust direction (axial direction of the tire) can be received by the engagement between the anchor portion 24 and the circumferential groove 22. Accordingly, the strong connection between the inner rubber layer 14 and the outer layer 18 can be realized, so that the risk of detachment of the outer layer 18 from the inner rubber layer 14 can be advantageously reduced. Thus, durability of the composite solid tire can be effectively improved.

Due to the structure of the composite solid tire 10 in which the inner rubber layer 14 has a predetermined thickness and the outer layer 18 is formed of a polyurethane elastomer and formed on the inner rubber layer 14, the impact exerted from a road surface is effectively absorbed and reduced by the inner rubber layer 14, thereby advantageously exhibiting the cushioning properties and buffering properties against the impact. Further, due to the excellent wear resistance of the polyurethane elastomer, durability of the outer layer 18, which is to be in contact with the road surface, is improved. Thus, the service life of the composite solid tire 10 can be advantageously improved.

Moreover, unlike the inner rubber layer 14, the outer layer 18 formed of the polyurethane elastomer does not contain any amounts of carbon black as a reinforcing material. Therefore, when the composite solid tire 10 is rolled and moved on the road surface, no black marks of the tire are left on the road surface. Thus, the outer layer 18 formed of a polyurethane elastomer contributes to keeping the environment clean and may not deteriorate a working environment where the composite solid tire 26 is used.

The composite solid tire 10 may be produced by various well-known methods. For example, the composite solid tire 10 may be produced by a die-casting method, which is described in JP-A-2004-359219. In the production of the composite solid tire 10 by the die-casting method, a predetermined number of the circumferential groove 22 is formed in the outer circumferential surface of an annular rubber member, which provides the inner rubber layer 14. Then, the annular rubber member is set in an outer die of a die-casting device, which is used to form the outer layer 18, and a predetermined polyurethane elastomer material is introduced into a space between the outer circumferential surface of the rubber member and the inner circumferential surface of the outer die. As a result, the anchor portion 24 which is configured to fill the circumferential groove 22 of the inner layer is integrally formed on the outer layer 18.

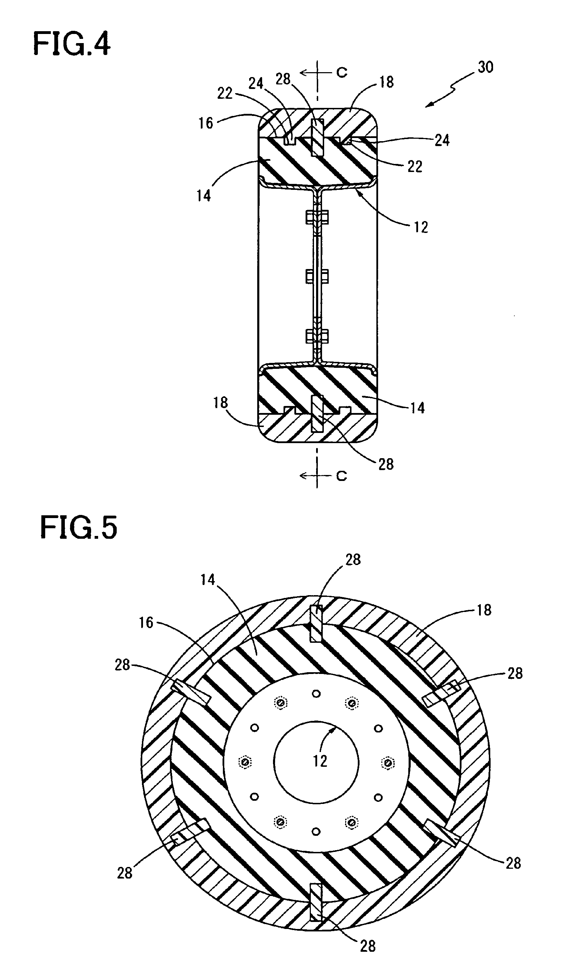

Based on above-described construction, a composite solid tire having a structure illustrated in Fig. 4 and Fig. 5 embodies the present invention. Like the above-described composite solid tire 10, in the composite solid tire having the structure illustrated in Fig. 4 and Fig. 5, the outer circumferential surface 16 of the inner rubber layer 14 thereof has two circumferential grooves 22, 22 that extend parallel to each other in the circumferential direction with a predetermined distance therebetween. Between the circumferential grooves 22, 22, a plurality of connecting pins 28 formed of a predetermined polyurethane elastomer (here, six connecting pins) are provided in the circumferential direction with a predetermined distance therebetween (here, they are equally spaced from each other by an angular interval of 60°). An end portion of each of the connecting pins 28 is inserted into the inner rubber layer 14 to a predetermined depth.

More specifically described, the connecting pin 28 is vertically provided such that the other end portion thereof protrudes from the outer circumferential surface 16 of the inner rubber layer 14 with a predetermined length. The portion of the connecting pin 28 protruded from the inner rubber layer 14 is inserted into the outer layer 18. In other words, the connecting pins 28 each having a predetermined length are provided such that they are embedded (inserted) into the outer layer 18 and the inner rubber layer 14, thereby connecting the outer layer 18 and the inner rubber layer 14 via the connecting pins 28.

As the polyurethane elastomer of the formation material of the connecting pin 28, any conventionally known polyurethane elastomer can be suitably selected and used. Preferably, the same material as the outer layer 18 is used. Due to the formation of the outer layer 18 and the connecting pin 28 by the same polyurethane elastomer, the connection between the outer layer 18 and the connecting pin 28 can be improved. Further, the connecting pin 28 can be produced at a low cost, because remaining materials in the production of the outer layer 18 can be used, for example.

The connecting pin 28 may have any shape such as a rectangular cylindrical shape or a cylindrical shape. Preferably, the connecting pin 28 has a cylindrical shape having a cross sectional diameter of about 10 to about 30 mm. Further, it is preferable that the connecting pin 28 be inserted into the inner rubber layer 14 or the outer layer 18 with a length of about 10 to about 30 mm.

Although six connecting pins 28 are provided with a predetermined distance therebetween in the circumferential direction in the composite solid tire 30 of this embodiment, the number of the connecting pin 28 may be five or less or seven or more. However, in view of the connecting strength and production cost, which depends on the number of the connecting pins, four to eight connecting pins 28 is preferable.

The composite solid tire 30 having the above-described structure can have more improved retention strength between the inner rubber layer 14 and the outer layer 18, because the inner rubber layer 14 and the outer layer 18 are integrated not only by the engagement of the circumferential groove 22, which is formed in the inner rubber layer 14, and the anchor portion 24, which is provided on the outer layer, but also by the connecting pins 28. Specifically, in addition to the retention strength between the inner rubber layer 14 and the outer layer 18 and the contact between the side surfaces of the anchor portion 24 and the side surfaces of the circumferential groove 22, the load inputted in the axial direction (transverse direction) of the tire is received by the connecting pins 28 whose end portions are each embedded in the inner rubber layer 14 and the outer layer 18. Accordingly, the stress inputted into the interface of the two layers can be effectively dispersed. As a result, the possibility of the detachment of the outer layer 18 from the inner rubber layer 14 is lowered. Thus, the composite solid tire 30 that exhibits improved durability can be provided.

While the present invention has been described in its preferred embodiment, it is to be understood that the present invention is by no means limited to the details of this embodiment.

For example, in the above embodiment, although the number of the circumferential grooves 22 formed in the outer circumferential surface 16 of the inner rubber layer 14 was two, the number of the circumferential groove 22 may be one, or more than two. Then, depending on the number of the circumferential groove 22, the anchor portion(s) 24, which is/are integrally formed with the outer layer 18, is/are formed on the corresponding position in the corresponding number, and the anchor portion(s) 24 is/are fitted into the circumferential groove(s) 22 so as to fill the circumferential groove(s), thereby obtaining the composite solid tire.

Although the circumferential grooves 22 formed in the outer circumferential surface 16 of the inner rubber layer 14 have a rectangular cross sectional shape in all of the constructions described above, the cross sectional shape of the circumferential groove 22 may be a shape of dovetail groove, trapezoidal shape, or polygonal shape, for example.

Further, other than the newly formed inner rubber layer 14 formed of a predetermined rubber material, the inner rubber layer 14 of the above-exemplified composite solid tire 10, 30 may be a used commercially available solid rubber tire in which a tread surface thereof is worn, but a predetermined thickness of the tread surface remains over the entire circumference of the wheel 12. The circumferential grooves 22 may be formed in the outer circumferential surface (tread surface) of the used commercially available solid rubber tire by a well-known cutting, for example. The production cost of the composite solid tire can be effectively reduced by reusing the remaining portion of the worn solid rubber tire as the inner rubber layer to form the composite solid tire 10 (30). Further, the disposal cost of the worn solid rubber tire and the damage to the environment can be advantageously reduced.

## Claims

1. A composite solid tire, comprising:
an inner rubber layer (14) having a predetermined thickness; and
an outer layer (18) formed of a polyurethane elastomer which is integrally formed on an outer circumferential surface (16) of the inner rubber layer,
wherein the outer circumferential surface of the inner rubber layer includes at least one circumferential groove (22) and the outer layer integrally includes at least one anchor portion (24) formed of the same polyurethane elastomer as the outer layer, the at least one anchor portion being configured to fill the at least one circumferential groove,
**characterized in that**, on the outer circumferential surface of the inner rubber layer (14), a plurality of connecting pins (28) formed of a polyurethane elastomer are vertically provided with a predetermined distance therebetween in a circumferential direction, and end portions of the plurality of connecting pins (28) are inserted into the outer layer (18), thereby connecting the outer layer and the inner rubber layer via the plurality of connecting pins.

2. The composite solid tire according to claim 1, wherein the at least one circumferential groove (22) formed in the outer circumferential surface of the inner rubber layer (24) comprises two circumferential grooves that are arranged parallel to each other and extend in the circumferential direction of the inner rubber layer, and the plurality of connecting pins (28) are provided between the two circumferential grooves so as to be spaced apart from each other in the circumferential direction.

3. The composite solid tire according to claim 1 or 2, wherein each of the plurality of connecting pins (28) has a cross sectional diameter of 10 to 30 mm and each of the end portions thereof is inserted into each of the inner rubber layer and the outer layer with a length of 10 to 30 mm.

4. The composite solid tire according to any one of claims 1 to 3, wherein the at least one circumferential groove (22) has a rectangular cross sectional shape.

5. The composite solid tire according to claim 4, wherein the at least one circumferential groove (22) has a width of 10 to 30 mm and a depth of 10 to 30 mm.

6. The composite solid tire according to any one of claims 1 to 5, wherein the inner rubber layer (14) is provided by a remaining portion of a worn solid rubber tire having a predetermined thickness.

7. The composite solid tire according to any one of claims 1 to 6, wherein a tread surface provided by the outer layer (18) includes a curved portion (26, 26) at each end in the width direction, a radius of curvature of the curved portion (26) that is positioned at an outer side in the vehicle width direction, under installation of the composite solid tire on a vehicle, being made larger than that of the curved portion (26) that is positioned at the other side in the vehicle width direction.

## Patentansprüche

1. Festkörperreifen, der Folgendes umfasst:
eine innere Gummischicht (14) mit einer vorgegebenen Dicke; und
eine Außenschicht (18), die aus einem Polyurethanelastomer besteht, das integriert an einer äußeren Umfangsfläche (16) der inneren Gummischicht ausgebildet ist,
worin die äußere Umfangsfläche der inneren Gummischicht zumindest eine Umfangsrille (22) umfasst und die Außenschicht zumindest einen aus dem gleichen Polyurethanelastomer wie die Außenschicht einstückig ausgebildeten Ankerteil (24) umfasst, wobei der zumindest eine Ankerteil so konfiguriert ist, dass er die zumindest eine Umfangsrille ausfüllt,
**dadurch gekennzeichnet, dass** an der äußeren Umfangsfläche der inneren Gummischicht (14) eine Vielzahl von aus einem Polyurethan gebildeten Verbindungsstiften (28) vertikal ausgebildet sind, zwischen denen in Umfangsrichtung ein vorgegebener Abstand besteht und die Endabschnitte der Vielzahl von Verbindungsstiften (28) in die Außenschicht (18) eingesetzt sind, wodurch die Außenschicht und die innere Gummischicht durch die Vielzahl an Verbindungsstiften miteinander verbunden sind.

2. Festkörperreifen nach Anspruch 1, worin die zumindest eine an der äußeren Umfangsfläche der inneren Gummischicht (24) ausgebildete Umfangsrille (22) zwei Umfangsrillen umfasst, die parallel zueinander angeordnet sind und sich in Umfangsrichtung der inneren Gummischicht erstrecken, und die Vielzahl an Verbindungsstiften (28) zwischen den beiden Umfangsrillen vorgesehen ist, sodass sie zueinander in Umfangsrichtung beabstandet sind.

3. Festkörperreifen nach Anspruch 1 oder 2, worin jeder aus der Vielzahl von Verbindungsstiften (28) einen Querschnittsdurchmesser von 10 bis 30 mm aufweist und jeder von deren Endabschnitten in jede der inneren Gummischicht und der Außenschicht mit einer Länge von 10 bis 30 mm eingesetzt ist.

4. Festkörperreifen nach einem der Ansprüche 1 bis 3, worin die zumindest eine Umfangsrille (22) eine rechteckige Querschnittsform aufweist.

5. Festkörperreifen nach Anspruch 4, worin die zumindest eine Umfangsrille (22) eine Breite von 10 bis 30 mm und eine Tiefe von 10 bis 30 mm aufweist.

6. Festkörperreifen nach einem der Ansprüche 1 bis 5, worin die innere Gummischicht (14) durch einen verbleibenden Teil eines abgenutzten Vollreifens mit vorgegebener Dicke ausgebildet ist.

7. Festkörperreifen nach einem der Ansprüche 1 bis 6, worin eine durch die Außenschicht (18) bereitgestellte Lauffläche einen gekrümmten Teil (26, 26) an jedem Ende in Breiterichtung umfasst, wobei der Krümmungsradius des gekrümmten Teils (26), der in Richtung der Fahrzeugbreite auf der Außenseite positioniert ist, bei Anbringung des Festkörperreifens an einem Fahrzeug so ausgebildet wird, dass er größer ist als jener des gekrümmten Teils (26), der in Richtung der Fahrzeugbreite auf der anderen Seite positioniert ist.

## Revendications

1. Pneu plein composite comprenant :
une couche de caoutchouc interne (14) ayant une épaisseur prédéterminée ; et
une couche externe (18) formée avec un élastomère de polyuréthane qui est formé de manière solidaire sur une surface circonférentielle externe (16) de la couche de caoutchouc interne,
dans lequel la surface circonférentielle externe de la couche de caoutchouc interne comprend au moins une rainure circonférentielle (22) et la couche externe comprend de manière solidaire au moins une partie d'ancrage (24) formée avec le même élastomère de polyuréthane que la couche externe, la au moins une partie d'ancrage étant configurée pour remplir la au moins une rainure circonférentielle,
**caractérisé en ce que**, sur la surface circonférentielle externe de la couche de caoutchouc interne (14), une pluralité de broches de raccordement (28) formées avec un élastomère de polyuréthane sont verticalement prévues avec une distance prédéterminée entre elles dans une direction circonférentielle, et les parties d'extrémité de la pluralité de broches de raccordement (28) sont insérées dans la couche externe (18), raccordant ainsi la couche externe et la couche de caoutchouc interne via la pluralité de broches de raccordement.

2. Pneu composite plein selon la revendication 1, dans lequel la au moins une rainure circonférentielle (22) formée dans la surface circonférentielle externe de la couche de caoutchouc interne (24) comprend deux rainures circonférentielles qui sont agencées parallèlement l'une à l'autre et s'étendent dans la direction circonférentielle de la couche de caoutchouc interne, et la pluralité de broches de raccordement (28) sont prévues entre les deux rainures circonférentielles afin d'être espacées l'une de l'autre dans la direction circonférentielle.

3. Pneu composite plein selon la revendication 1 ou 2, dans lequel chacune de la pluralité de broches de raccordement (28) a un diamètre transversal de 10 à 30 mm et chacune de ses parties d'extrémité est insérée dans chacune parmi la couche de caoutchouc interne et la couche externe avec une longueur de 10 à 30 mm.

4. Pneu composite plein selon l'une quelconque des revendications 1 à 3, dans lequel la au moins une rainure circonférentielle (22) a une forme transversale rectangulaire.

5. Pneu composite plein selon la revendication 4, dans lequel la au moins une rainure circonférentielle (22) a une largeur de 10 à 30 mm et une profondeur de 10 à 30 mm.

6. Pneu composite plein selon l'une quelconque des revendications 1 à 5, dans lequel la couche de caoutchouc interne (14) est fournie par une partie résiduelle d'un pneu plein en caoutchouc usé ayant une épaisseur prédéterminée.

7. Pneu composite plein selon l'une quelconque des revendications 1 à 6, dans lequel une surface de bande de roulement fournie par la couche externe (18) comprend une partie incurvée (26, 26) à chaque extrémité dans le sens de la largeur, un rayon de courbure de la partie incurvée (26) qui est positionnée sur un côté externe dans le sens de la largeur du véhicule, suite à l'installation du pneu composite plein sur le véhicule, est plus important que celui de la partie incurvée (26) qui est positionnée de l'autre côté dans le sens de la largeur du véhicule.
